(19) Europäisches Patentamt
European Patent Office
Office européen des brevets

(11) **EP 1 546 242 B1**

(12) **EUROPÄISCHE PATENTSCHRIFT**

(45) Veröffentlichungstag und Bekanntmachung des Hinweises auf die Patenterteilung:
**29.09.2010 Patentblatt 2010/39**

(21) Anmeldenummer: 03756427.5

(22) Anmeldetag: **30.08.2003**

(51) Int Cl.:
*C08J 3/05* (2006.01)    *C08J 7/12* (2006.01)
*C08G 73/10* (2006.01)

(86) Internationale Anmeldenummer:
**PCT/DE2003/002879**

(87) Internationale Veröffentlichungsnummer:
**WO 2004/031268 (15.04.2004 Gazette 2004/16)**

(54) **POLYIMID-MIKROPARTIKEL**

POLYIMIDE MICROPARTICLES

MICROPARTICULES DE POLYIMIDE

(84) Benannte Vertragsstaaten:
**AT BE BG CH CY CZ DE DK EE ES FI FR GB GR HU IE IT LI LU MC NL PT RO SE SI SK TR**

(30) Priorität: **30.09.2002 DE 10245545**

(43) Veröffentlichungstag der Anmeldung:
**29.06.2005 Patentblatt 2005/26**

(73) Patentinhaber: **GKSS-Forschungszentrum Geesthacht GmbH**
**21502 Geesthacht (DE)**

(72) Erfinder:
• **ALBRECHT, Wolfgang**
**14513 Teltow (DE)**
• **HILKE, Roland**
**14513 Teltow (DE)**
• **LÜTZOW, Karola**
**12167 Berlin (DE)**
• **RETTSCHLAG, Mario**
**14532 Stahnsdorf (DE)**
• **SANTOSO, Filiana**
**13349 Berlin (DE)**
• **WEIGEL, Thomas**
**14557 Wilhelmshorst (DE)**

(74) Vertreter: **Seemann, Ralph**
**Patentanwälte Seemann & Partner**
**Ballindamm 3**
**20095 Hamburg (DE)**

(56) Entgegenhaltungen:
**DE-A- 10 111 665    GB-A- 2 198 739**

Bemerkungen:
Die Akte enthält technische Angaben, die nach dem Eingang der Anmeldung eingereicht wurden und die nicht in dieser Patentschrift enthalten sind.

EP 1 546 242 B1

## Beschreibung

Die Erfindung betrifft ein Verfahren zur Herstellung von porösen Polyimid-Mikropartikeln.

Verfahren zur Herstellung partikulärer Trägermatrizes verschiedener Trennprofile sind hinreichend bekannt und auf unterschiedlicher Polymerbasis kommerziell erhältlich. Die Verfahren zur Herstellung derselben basieren insbesondere auf dem Fachmann bekannten und in der Praxis zumindest partiell angewandten Grundverfahrensprinzipien, die im Folgenden kurz dargestellt werden sollen:

Vorgeformte Polymere, vorzugsweise natürlichen oder halbsynthetischen Ursprunges, die bereits chemische Funktionen für das Anbinden von Liganden aufweisen, werden in einem wässrigen Lösemittel gelöst. Diese Lösung wird in einer mit dieser Polymerlösung nicht mischbaren Flüssigkeit dispergiert. Die Lösungstropfen werden anschließend z. B. durch Vernetzung oder andere chemische oder physikalische Prozesse zum Mikropartikel verfestigt.

Unter diesen Bedingungen gelingt die Verformung der Polymerlösung zu kugelförmigen Lösungstropfen durch Dispergierung in einem nichtmischbaren, organischen Medium in einfacher Weise. Voraussetzung für die Anwendbarkeit dieses Grundverfahrens ist die gute Dispergierbarkeit der Polymerlösung, u. U. unterstützt durch oberflächenaktive Substanzen, im Dispersionsmittel. Die Anwendbarkeit ist daher auf die Dispersion von wässrigen Polymerlösungen in einem hydrophoben, organischen Dispersionsmedium bzw. in einem Chlorkohlenwasserstoff beschränkt; es können folglich nur wasserlösliche Polymere als Matrixbildner eingesetzt werden. Durch Additive und die Art der Verfestigung kann das Porenprofil der so hergestellten Trägermatrix bzw. Mikropartikel beeinflusst werden, ohne dass die oft geforderte Grobporigkeit bei hoher Porendichte an der Partikeloberfläche erreicht wird. Des Weiteren entstehen grundsätzlich gelartige Trägermatrizes, deren Porenstruktur ausschließlich durch Quellung des Partikels entsteht; permanent poröse Trägermatrizes können nach diesem Verfahrensprinzip grundsätzlich nicht hergestellt werden. Je nach Umfang der Fixierung entstehen hochgequollene und daher leicht verformbare Matrizes, die insbesondere bei wirtschaftlich höheren Durchflussraten komprimieren und einen erheblichen Durchflusswiderstand aufweisen. Eine Verwendung quellungsarmer, synthetischer Polymere, die vorzugsweise in polaren, aprotischen Lösemitteln löslich sind, verbietet sich nach diesem Verfahrensprinzip wegen der ungünstigen Mischverhältnisse mit Dispergiersystemen, obwohl interessante Eigenschaftsprofile zu erwarten sind. Vertreter von Trägermatrizes, die nach diesem Verfahrensprinzip hergestellt werden, sind Sepharose-Typen TM (vorzugsweise hergestellt aus vernetzter Agarose) und Cellulose-Beads.

Ein 2. Grundverfahren basiert auf der Verwendung chemisch unterschiedlichster, meist hydrophober, jedoch notwendigerweise polymerisationsfähiger Monomeren, die zusammen mit einem Polymerisationsinitiator und Additiven (chemisch unterschiedlichste, organolösliche, aber wasserunlösliche Substanzen) in einer nicht mischbaren Flüssigkeit, vorzugsweise Wasser u. U. unter Zusatz oberflächenaktiver Stoffe dispergiert werden. Die entstandenen Monomer/Additiv-Tropfen der entstehenden Dispersion werden nach der Dispergierung durch vernetzende Fällungspolymerisation zum Mikropartikel verfestigt. Während dieses Fällungspolymerisationsprozesses entstehen i. A. permanent poröse Trägermatrizes aus synthetischen, vernetzten Polymeren geringer Quellbarkeit in wässrigen Medien. Charakteristisch ist, dass das Polymer im Prozess der Partikelherstellung aufgebaut wird. Es wurden vielfältige Möglichkeiten der Beeinflussung der Porosität der entstehenden Mikropartikel in der Literatur beschrieben. In einer speziellen Ausführungsform können die dispergierten Tropfen der organischen Phase vor der Polymerisation eingefroren und in diesem Zustand polymerisiert werden.

Das 2. Grundverfahren zur Herstellung von Trägermatrizes ist jedoch nicht anwendbar, wenn bereits synthetisierte Polymere zu Mikropartikeln verformt werden sollen. Entsprechend dieses Dispersionsprinzips müssen organolösliche Monomere mit Zusätzen an schwer wasserlöslichen Monomeren mit Hydroxyl-, Amino- und/oder Carboxylfunktionen ausgewählt werden, was den Gehalt an chemischen Funktionen zur Bindung von Affinitätsliganden signifikant einschränkt. Derartige Trägermatrizes müssen folglich zur Erzeugung bzw. Erhöhung der kopplungsfähigen Bindungsfunktionen vor Anwendung mit entsprechenden chemischen Funktionen versehen werden, um Bindungsfunktionen in ausreichender Quantität verfügbar zu machen. Dies wiederum erfordert oftmals den Einsatz aggressiver Medien und harscher Nachbehandlungsbedingungen.

Endlich ist ein 3. Grundverfahren bekannt, mittels dessen Mikropartikel aus Polymerlösungen in Analogie zu einer thermischen Phaseninversion bei der Membranformierung erzeugt werden können. Voraussetzung für die Realisierung dieses Grundverfahrens ist es, ein Lösegemisch und ein geeignetes Dispersionsmedium zu finden, das dem beschriebenen Verhalten entspricht. Hierzu wird aus dem zu verformenden Polymer bei erhöhter Temperatur eine Polymerlösung erzeugt, die beim gezielten Abkühlen auf Raumtemperaturen einer Phaseninversion unterliegt. Dispergiert man eine derartige Polymerlösung in einem phasenbildenden Dispersionsmedium (Mikrotropfenbildung) und kühlt anschließend die Dispersion ab, so entsteht ein fixiertes i. A. poröses Mikropartikel.

Prinzipiell sollte es möglich sein, nach diesem 3. Grundverfahren quellungsarme Trägermatrizes aus synthetischen Polymeren und abhängig vom verwendeten Polymer mit funktionalisierbaren chemischen Gruppen zu formieren. Ein Nachteil dieses 3. Grundverfahrens besteht in der sehr diffizilen Prozessführung, um Partikel der entsprechenden Partikelgröße zu erhalten und entsprechende Löse/Dispersionssysteme zu finden. Des Weiteren entstehen Partikel, deren äußere Oberfläche eine relativ geringe Porosität aufweist. Die Poreneingänge haben einen geringen Porendurchmesser, was die Diffusion großvolumiger Moleküle ins Innere des Partikels stark erschwert. Derartige Partikel weisen trotz vergleichsweise großer innerer Oberfläche eine geringe Adsorptionskapazität für großvolumige Substanzen auf.

Insgesamt ist allen diesen Herstellungsprinzipien gemein, dass zwischen dem entstehenden Partikel und der flüssigen oder gasförmigen Umgebung eine Phasengrenzfläche entsteht, die aus energetischen Gründen die Oberfläche des entstehenden Partikels so verändert, dass eine Oberflächenschicht mit geringer Porosität sowohl hinsichtlich Porenanzahl als auch Porengröße entsteht. Diese Grenzschicht bestimmt und beschränkt die Zugänglichkeit des inneren Porensystems der Partikel. Durch Quellung des Gesamtpartikels (Nutzung von Grundprinzip 1) kann die Oberflächenporosität moderat, jedoch nicht ausreichend vergrößert werden, was allerdings mit dem Nachteil einer Kompressionsinstabilität der Trägermatrix beim Durchfluss einer Flüssigkeit zwangsweise verbunden ist.

Trägermatrizes aus synthetischen, organolöslichen Polymeren lassen sich nach den Darstellungen grundsätzlich und auch nur bedingt nach dem 3. Grundverfahren herstellen, wenn zur Lösung des die Trägermatrix bildenden Polymers polare, aprotische Lösemittel oder Gemische derselben verwendet werden müssen. Geeignete Lösemittel sind auffindbar, aber es mangelt an geeigneten Dispersionsmitteln. Dennoch resultiert auch hier - setzt man eine ausreichende Anzahl funktionalisierbarer Gruppen des zu Partikel zu verformenden Polymers voraus, was jedoch gerade bei diesen Polymeren nicht selbstverständlich ist - der oben beschriebene Nachteil einer zu geringen Oberflächenporosität, der besonders gravierend ist, wenn wie bei der Immunadsorption großvolumige, anspruchsvolle Moleküle mittels Adsorption an einer geeignet funktionalisierten Trägermatrix adsorbiert und aus Medien entfernt werden sollen.

Es ist des Weiteren bekannt, dass Polyimide durch aminische Modifikatoren chemisch verändert werden können. Die EP-A 0 401 005 beschreibt die Verwendung aminischer Modifikatoren zur Vernetzung von Polyimid-Gastrennmembranen in einer heterogenen Reaktion. In DE-A 41 175 01 wird die Modifizierung von Polyimid-Lösungen mit Amin-Modifikatoren unter Nutzung einer homogenen Reaktion beansprucht, um die Viskosität der Polyimid-Lösung signifikant zu erhöhen.

GB-A 2 198 739 betrifft einen porösen Membranfilter aus feinen perlenartigen Artikeln aus einem Polyetherimid. Die Membran wird in einem Polymerisationsprozess aus einem aromatischen Bis(etheranhydrid) und einem organischen Diamin hergestellt. Die Polyetherimid-Partikel werden durch Zusatz von Aminen funktionalisiert, wobei die Struktur der Membran im Wesentlichen nicht geändert wird.

Eigene Patente beanspruchen Verfahren zur Funktionalisierung von Polyimiden bei homogenen (DE-A 101 11 663) und bei heterogenen Reaktionsführung (DE-A 101 11 665), die so realisiert werden, dass in beiden Fällen eine regulierbare, insbesondere jedoch hohe Anzahl an frei verfügbaren chemischen Funktionen resultiert, die in dieser Form oder nach weiteren Umsetzungen für adsorptive Trennungen genutzt werden können.

Der Kenntnisstand über die gegenwärtig verfügbaren Matrizes ist in einer Arbeit von Suoeka (Present status of apheresis technologies, Part. 3: Adsorbents, Therapeutic Apheresis 1 (1997), 271-283) zusammengestellt. Anwendungen partikulärer Träger in der Chromatographie diskutieren Hermanson et al. (Immobilized Affinity Ligand Techniques, Academic Press Inc., San Diego, New York, Boston, London, Sydney, Tokyo, Toronto, 1992, pp. 1-50). Neueste Entwicklungen zur Herstellung von Trägermatrizes wurden des Weiteren in einer Arbeit von Leonard (New packing materials for protein chromatography, J. Chromatog. B 699 (1997), 3-27) ausführlich diskutiert.

Aufgabe der Erfindung ist es daher, quellungsarme, hochporöse Mikropartikel mit einer hohen Oberflächenporosität und großen Porendurchmessern, um großvolumige Moleküle mit hoher Selektivität, Geschwindigkeit und Kapazität ökonomisch abtrennen zu können, sowie ein Verfahren zu deren Herstellung bereitzustellen.

Gelöst wird diese Aufgabe durch die Lehre der Ansprüche.

Überraschenderweise wurde gefunden, dass funktionalisierte Mikropartikel, die auch als partikuläre Trägermatrizes bezeichnet werden können, aus Polyimiden mit der beschriebenen, komplexen Charakteristik mittels des beanspruchten Verfahrens bereitgestellt werden können. Dazu werden in einer ersten Verfahrensstufe Mikropartikel aus Polyimiden hergestellt. In dieser Verfahrensstufe a) wird eine Polymerlösung aus einem Polyimid-Polymer oder aus mehreren Polyimid-Polymeren und einem Lösemittel oder einem Lösemittelgemisch in an sich bekannter Weise hergestellt. Es können somit erfindungsgemäß 1, 2, 3, 4, .... viele Polyimid-Polymere und auch 1, 2, 3, .... viele Lösemittel Anwendung finden.

In einer zweiten Verfahrensstufe und somit in der Stufe b) wird die Polymerlösung durch Versprühen oder durch thermische Phaseninversion zu Mikropartikeln verformt, insbesondere in an sich bekannter Weise.

Die in der Stufe b) erhaltenen Mikropartikel werden nasschemisch mit einer wässrigen, einen amin-haltigen Modifikator enthaltenden Funktionalisierungslösung behandelt. Als amin-haltiger Modifikator werden aliphatische Di- bzw. Triamine bzw. deren Gemische eingesetzt, nämlich aliphatische Di- oder Triamine mit primären und/oder sekundären und/oder tertiären Amingruppen. Die die Amingruppen verbindenden Gruppen bzw. Spacer sind aliphatischer Natur und somit Alkylengruppen, die 2, 3, 4 oder 5 C-Atome besitzen. Diese Behandlung führt zu einer Öffnung des Porensystems der Mikropartikel, und zwar insbesondere an der Partikeloberfläche, unter gleichzeitiger Funktionalisierung der inneren und äußeren Oberfläche.

Als Modifikator wird insbesondere bevorzugt Diethylentriamin eingesetzt.

Bei Einsatz dieses Modifikators wird das Porensystem, insbesondere an der Partikeloberfläche, jedoch auch im Inneren der Mikropartikel geöffnet. Es entstehen die erfindungsgemäß offenporigen Mikropartikel, deren Oberflächenporosität praktisch der Porosität im Inneren der Partikel entspricht. Gleichzeitig erfolgt bei dieser Behandlung eine kovalente Funktionalisierung aller Oberflächen mit Amingruppen. Diese kovalente Bindung an Mikropartikeln erfolgt durch Umsetzung der Imidgruppen mit den Amingruppen des Modifikators unter Erhalt der Makromolekülstruktur.

Die in der Stufe c) erhaltenen Polyimid-Mikropartikel können in der Stufe d) in an sich bekannter Weise durch Waschen oder ähnliches gereinigt und ggf. getrocknet werden.

Sollte es erforderlich sein, den Anteil an funktionalisierbaren und/oder anderen chemischen Gruppen zu erhöhen, dann kann eine zusätzliche Verfahrensstufe c2) durchgeführt werden. In dieser Stufe c2) werden die nach Durchführung der Stufe c) erhaltenen Mikropartikel nach Entfernen des aminhaltigen Modifikators der Verfahrensstufe c) mit einer wässrigen, mindestens einen weiteren Modifikator enthaltenden Funktionalisierungslösung behandelt. Dieser weitere Modifikator besteht aus einer Verbindung oder aus 2, 3, ... vielen Verbindungen mit mindestens zwei funktionellen Gruppen, von denen eine Gruppe eine Amingruppe ist.

Der in der Verfahrensstufe c2) eingesetzte weitere Modifikator sollte im Übrigen nicht degradierend wirken.

Vorzugsweise sollte zwischen den Verfahrensstufen a) und b), zwischen den Verfahrensstufen b) und c) und zwischen den Verfahrensstufen c) und c2) die erhaltenen Mikropartikel zwischengewaschen werden, um den Gehalt an entfernbaren Bestandteilen der vorhergegangenen Stufen in der Folgestufe gering zu halten.

Erfindungsgemäß können somit Mikropartikel bzw. Trägermatrizes mit einem komplexen Eigenschaftsprofil bei Verwendung von Polyimiden als Grundpolymer und einer Behandlung bzw. Nachbehandlung der partikulären Ausgangspartikel mit speziellen wässrigen amin-haltigen Lösungen realisiert werden.

Wenn erfindungsgemäß von einem Polyimid-Polymer gesprochen wird, dann zählen dazu nicht nur reine Polyimide, sondern auch solche Stoffklassen, wie Poly(amid-imide), Poly(ester-imide), Poly(ether-imide) usw. Erfindungsgemäß ist es lediglich erforderlich, dass zumindest das hier als Polyimid bezeichnete Polymer in der Polymerkette Imidgruppen in ausreichender Anzahl in der Hauptkette enthält. Folglich kann jedes, diese Imid-Funktion in ausreichender Zahl aufweisende Polymer auf die erfindungsgemäße Weise zu Mikropartikeln mit den oben beschriebenen komplexen Eigenschaftsbildern verformt werden. Als eine bevorzugte Anzahl von Imidgruppen hat sich gezeigt, dass dieses Polyimid-Polymer zumindest eine Imidgruppe pro Grundeinheit bei einer Molmasse von kleiner/gleich 1000 g/Mol aufweist. Vorzugsweise werden jedoch Polymere aus "reinen" Polyimiden bzw. deren Gemische eingesetzt, denen ggf. polymere Additiva zugesetzt werden können. Das verwendete Polyimid-Polymer und auch das Additiv oder die Additiva, das bzw. die ggf. vorhanden ist/sind, müssen in einem gemeinsamen Lösemittel oder Lösemittelgemisch löslich sein, um eine Herstellung der Mikropartikel aus dem gelösten Zustand zu ermöglichen. Das Lösemittelgemisch kann dabei 2, 3, 4 oder viele Lösemittel aufweisen bzw. daraus zusammengesetzt sein.

Als Lösemittel für die Herstellung der Polyimid-Lösung bzw. Polymerlösung kann prinzipiell jedes, dem Fachmann für Polyimide bekannte Lösemittel bzw. jedes Lösemittelgemisch eingesetzt werden, mit dem Polymerlösungen mit Polymergehalten von vorzugsweise 1 bis 20 Gew.-% hergestellt werden können. Dieser Bereich von 1 bis 20 Gew.-% umfasst alle dazwischen liegenden Werte und insbesondere alle dazwischen liegenden Einzelwerte und somit 1, 2, 3, 4, 5, 6, 7, 8, 9, 10, 11, 12, 13, 14, 15, 16, 17, 18, 19 und 20 Gew.-%.

Vorzugsweise werden jedoch Lösemittel bzw. Lösemittelgemische zur Herstellung der Polymerlösung eingesetzt, die bei einer Phaseninversion der Polymerlösung durch Einwirkung eines Fällmittels zumindest in den Oberflächenbereichen des gebildeten Partikels zu einer schaumartigen Morphologie führen.

Die Konzentration in der Polymerlösung beträgt insbesondere bevorzugt 5 bis 15 Gew.-%, wobei dies vorzugsweise für ein Sprühverfahren zur Herstellung der Mikropartikel gilt. Unter diesen Bedingungen entstehen - je nach Wahl der Herstellungsbedingungen und des Herstellungsverfahrens Mikropartikel mit einem Partikeldurchmesser von 20 $\mu$m bis 1000 $\mu$m, die eine geringe Neigung zur Quellung aufweisen.

In der Stufe c) werden die in der Stufe b) erhaltenen Mikropartikel behandelt bzw. nachbehandelt. Die feuchten Partikel werden dabei mit einer vorzugsweise 1 bis 10 Gew.-%igen wässrigen Lösung eines amin-haltigen Modifikators während eines Zeitraumes von 5 min bis 4 h, insbesondere bevorzugt von 30 min bis 2 h mit oder ohne Rühren bei einer Temperatur von vorzugsweise 50 bis 100 °C und insbesondere bevorzugt bei 70 bis 95 °C behandelt.

Falls dennoch eine höhere Anzahl an potentiell aktivierbaren, funktionellen Gruppen gleicher oder differierender chemischer Natur gewünscht wird, kann in einer weiteren Behandlungsstufe und somit in der Verfahrensstufe c2) eine weitere Behandlung erfolgen. Dabei wird eine Funktionalisierungslösung mit einem weiteren Modifikator zur Anwendung gebracht. Dieser weitere Modifikator kann aus einer Verbindung mit mindestens zwei funktionellen Gruppen pro Molekül aufgebaut sein, wobei mindestens eine der funktionellen Gruppen eine Amingruppe ist. Bei dieser Verbindung handelt es sich somit um eine mindestens difunktionelle Verbindung. Es können Verbindungen mit den unterschiedlichsten chemischen Strukturen Anwendung finden. Als Modifikator kann ferner eine Mischung aus 2, 3 oder vielen derartigen Verbindungen eingesetzt werden. Als Modifikator können diejenigen Verbindungen Anwendung finden, die in der DE-A 101 11 665 der Anmelderin beschrieben sind. Diese Verbindungen sind monoaminischer Natur und besitzen eine geringe Tendenz zur Öffnung des Porensystems bei der Durchführung der erfindungsgemäßen Verfahrensstufen. Sie sind zudem leicht aktivierbar. Als weitere, aktivierbare funktionelle Gruppen werden vorzugsweise Hydroxyl- und/oder Carboxyl-Gruppen eingesetzt. Als weiterer Modifikator finden insbesondere Alkoholamine, Aminosäuren, Iminodiessigsäure, Phenylendiamin und Polyamine vom Typ des Ehtylenimins Anwendung.

Diese kovalent gebundenen und in großer Anzahl vorhandenen Amingruppen können in einfacher Weise aktiviert und bereits in dieser Form als adsorptives Medium bzw. nach Bindung von Affinitätsliganden für adsorptive Trennungen genutzt werden. Des weiteren ist es möglich, diese Amingruppen in andere funktionelle Gruppen, wie beispielsweise Carboxyl-, Hydroxyl- oder Aldehyd-Gruppen umzusetzen, die bekanntermaßen geeignete Funktionen für die Bindung von Liganden darstellen.

Abschließend werden die auf die erfindungsgemäße Weise hergestellten Mikropartikel in an sich bekannter Weise intensiv gewaschen, um alle nicht kovalent gebundenen Bestandteile des Herstellungsverfahrens, außer Wasser, zu entfernen. Gewünschtenfalls können die Mikropartikel anschließend auch getrocknet werden, was vorzugsweise bei Raumtemperatur erfolgt. Die Stabilität der erfindungsgemäßen Mikropartikel gegenüber Trocknungsprozessen ist so hoch, dass sich während einer milden Trocknung (Trocknung bei Raumtemperatur) die gesamte Porosität der Partikel nur geringfügig ändert.

Die Temperaturbedingungen und die Länge der Behandlung in den Verfahrensstufen c) und c2) sind im Übrigen vorzugsweise die gleichen, können jedoch auch verschieden sein.

Zusammenfassend lässt sich feststellen, dass die erfindungsgemäßen Mikropartikel quellungsstabil sind. Sie weisen nur einen geringen Durchströmungswiderstand auf und verfügen über eine hochporöse Struktur mit einer hohen Anzahl an Oberflächenporen mit Porendurchmessern größer 10 nm. Damit ist die Porosität der Oberflächenschichten der erfindungsgemäßen Mikropartikel vergleichbar mit der Porosität im Partikelinneren.

Die Oberflächen (innere und äußere Oberfläche) der Mikropartikel ist mit einer großen Anzahl an funktionellen Gruppen versehen, die leicht aktivierbar sind und somit leicht aktivierbare Bindungsstellen für Affinitätsliganden darstellen. Ferner ist eine Dampfsterilisation der erfindungsgemäßen Mikropartikel ohne merkliche Eigenschaftsveränderung möglich.

Die nach dem erfindungsgemäßen Verfahren hergestellten Mikropartikel werden vorzugsweise in Kombination mit Peptid-Liganden als Immunadsorber für Immunoglobuline eingesetzt.

Zu den nach dem erfindungsgemäßen Verfahren hergestellten Mikropartikeln zählen auch solche, an die Liganden der unterschiedlichsten Art gebunden sind, wobei diese Verbindung kovalenter oder auch anderer Art sein kann.

Die Erfindung wird im Folgenden anhand der nachstehenden Beispiele zur erfindungsgemäßen Herstellung der Mikropartikel und ihrer Eigenschaften näher erläutert. Bei dem eingesetzten Polyamid handelt es sich um ein Polyetherimid (PEI) vom Ultem 1000-Typ (General Electric). Die Herstellung der Ausgangs-Mikropartikel erfolgte beispielhaft mittels eines Sprühverfahrens mit anschließender Fällmittel induzierter Phaseninversion in Wasser. Bei den prozentualen Angaben handelt es sich um Masse-%, sofern nichts anderes angegeben ist.

Zur Charakterisierung der erfindungsgemäßen Mikropartikel wurden folgende Charakterisierungstechniken angewandt.

1. Der Partikeldurchmesser wurde mittels Mikroskop mit graduierter Messplatte im feuchten Zustand ermittelt, wobei größer/gleich 200 Partikel vermessen wurden.

2. Die Gesamtporösität wurde gravimetrisch ermittelt. Hierzu wurden ein Partikelgelbett unterschiedlichen Bettvolumens durch Absaugen definiert konditioniert und das Gewicht der entnommenen, feuchten und der trockenen Probe ermittelt. Die Gesamtporösität [%] resultiert aus

$$P_{Gesamt} = \frac{(W_{feucht} - W_{trocken})}{W_{trocken}} \cdot 100$$

Diese Gesamtporösität erfaßt das Porenvolumen und das Volumen des anhaftenden Wassers.

3. Der Gehalt an Amin-Funktionen wurde mittels Farbstoffadsorption unter Verwendung von Acid Orange II ermittelt. Die bei pH = 3 mit Farbstoff-beladenen Partikel wurden nach der Beladung (24 h) intensiv gespült, der Farbstoff bei pH = 12 desorbiert und die Farblösung spektroskopisch bei einer Wellenlänge von 492 nm vermessen.

4. Die Struktur der Partikel oberfläche vor und nach der Behandlung wurde mittels Rasterelektronenmikroskopie erfaßt. Die nach Alkoholaustausch getrockneten Proben wurden mit Gold/Palladium gesputtert.

Beispiel 1:

Herstellung der Mikropartikel/Trägermatrix 1:

Es wurde eine Lösung von PEI, gelöst in einem Lösemittelgemisch, bestehend aus 96 % N-Methylpyrrolidon und 4 % Wasser durch 4 h Lösen bei 80 °C hergestellt. Nach Abkühlen wurde die Lösung filtriert und in diesem Zustand zur Herstellung von Mikropartikeln nach einem Sprühverfahren unter Verwendung einer Sprühdüse mit einem Lochdurchmeser von 130 μm eingesetzt. Die Versprühung erfolgte unter Verwendung von Stickstoff über einen Luftspalt von 8 cm in ein Fällmedium, bestehend aus Wasser. Nach Herstellung wurden die Mikropartikel mehrfach mit Wasser gewaschen und abschließend 1 h bei 100 °C behandelt und erneut gewaschen.

Die erhaltenen Partikel wurden hinsichtlich Partikeldurchmesser, Gesamtporosität, Bettvolumen pro g Trokkenpartikel und dem morphologischen Erscheinungsbild der Partikeloberfläche charakterisiert.

Die folgenden charakteristischen Daten wurden ermittelt:

| | |
|---|---|
| Partikeldurchmesserbereich : | 210 - 330 μm |
| Gesamtporosität : | 81,4 % |
| Bettvolumen/g Trockenpartikel : | 8,0 ml |

Beispiele 2 bis 6:

Die im Beispiel 1 hergestellten Mikropartikel wurden mit einer 4-%igen wäßrigen Diethylentriamin (DETA)-Lösung bei 90 °C unterschiedliche Zeiten nachbehandelt. Um diese primäre Behandlung zu realisieren, wurde folgender experimenteller Weg gewählt:

Mikropartikel des Beispiels 1 mit einem Bettvolumen von 25 ml wurden in ein thermostatierbares Gefäß sedimentiert, der Überstand sorgfältig entfernt und mit 40 ml einer 4-%igen, wässrigen DETA-Lösung bei Raumtemperatur versetzt und in eine Schüttelmaschine eingesetzt. Unmittelbar nach Herstellung dieser Suspension wurde mit einem auf 90°C vorgeheizten Thermostaten unter Schütteln (150 U/min) erwärmt und behandelt. Der Zeitpunkt des Anschlusses an den Thermostaten wurde als Behandlungszeit 0 definiert.

Die behandelten Partikel wiesen die in Tabelle 1 erhaltenen Charakteristika auf.

Tabelle 1: Charakteristische Daten der Beispiele 2-6

| Beispiel | Behandlungszeit | Partikeldurchmesserbereich | Gesamtporösität | Amin-Gehalt |
|---|---|---|---|---|
| | [min] | [μm] | [%] | [nmol /mg Partikel-$_{trocken}$] |
| 1 | 0 | 210-330 | 81,4 | 0 |
| 2 | 30 | - | 83,1 | 78 |
| 3 | 60 | 210-330 | 86,7 | 125 |
| 4 | 90 | 210-330 | 88,8 | 173 |
| 5 | 105 | - | 91,4 | 211 |

Entsprechend der ermittelten Daten veränderte sich der Partikeldurchmesserbereich durch die Behandlung - wenn überhaupt lediglich in den Fehlergrenzen der Messung, während die Gesamtporosität als Folge der Behandlung (Hydrophilisierung) anstieg. Ebenso wurde ein gezielt einstellbarer, hoher Gehalt an Amin-Funktionen während der Behandlung kovalent an die Membran gebunden.

Es ergibt sich eine vergrößerte Gesamtporosität an auflösbaren Poren mit Porendurchmessern größer 10 nm als Folge der Behandlung im Vergleich zum unbehandelten Partikel.

Beispiele 7 und 8:

Die im Beispiel 1 hergestellten Mikropartikel wurden entsprechend Beispiel 2 mit einer 4-%igen wäßrigen Diethylentriamin (DETA)-Lösung bei 90 °C 30 min nachbehandelt, abgekühlt und mit destilliertem Wasser bis zur Neutralität des Waschwassers gespült. Anschließend erfolgte unter den gleichen Bedingungen eine zweite Nachbehandlung mit den Unterschieden, daß eine 4-%ige wässrige Polyethylenimin-Lösung ($M_n$ = 600 D; $M_w$ = 800 D) als Modifikatorlösung verwendet und die Nachbehandlung 10 bzw. 30 min durchgeführt wurde.

Die behandelten Partikel wiesen die in Tabelle 2 erhaltenen Charakteristika auf.

Tabelle 2: Charakteristische Daten der Beispiele 7 und 8

| Beispiel | Behandungszeit | Gesamtporösität | Amin-Gehalt |
|---|---|---|---|
| | [min] | [%] | [nmol /mg Partikel $_{trocken}$] |
| 2 | 30 | 83,1 | 78 |
| 7 | 30 + 10 | 83,1 | 127 |
| 8 | 30 + 30 | 83,3 | 131 |

Unter diesen Nachbehandlungsbedingungen konnte der Gehalt an Amin-Gruppen erhöht werden, ohne daß sich die Gesamtporosität des Grundpartikels merklich erhöhte.

Beispiel 9:

Die im Beispiel 1 hergestellten Mikropartikel wurden entsprechend Beispiel 2 mit einer 4-%igen wässrigen Diethylentriamin (DETA)-Lösung bei 90 °C 30 min nachbehandelt, abgekühlt und mit destilliertem Wasser bis zur Neutralität des Waschwassers gespült. Anschließend erfolgte unter den gleichen Bedingungen eine zweite Nachbehandlung mit den Unterschieden, daß eine 4-%ige wässrige Polyethylenimin-Lösung ($M_n$ = 600 D; $M_w$ = 800 D) als Modifikatorlösung verwendet und die Nachbehandlung 10 min durchgeführt wurde. Nach dieser 2. Nachbehandlung wurden die neutral gewaschenen Partikel bei Raumtemperatur getrocknet und anschließend rückbefeuchtet.
Die behandelten Partikel wiesen die in Tabelle 3 erhaltenen Charakteristika auf.

Tabelle 3: Charakteristische Daten der Beispiele 7 und 9:

| Beispiel | Behandlungszeit | Gesamtporösität | Amin-Gehalt |
|---|---|---|---|
| | [min] | [%] | [nmol /mg Partikel $_{trocken}$] |
| 7 | 30 + 10 | 83,1 | 127 |
| 9 | 30 + 10 | 78,1 | 124 |

Durch diese Trocknung verringerte sich die Gesamtporösität nur geringfügig. Der Amin-Gehalt ist innerhalb des Meßfehlers der Bestimmungstechnik identisch. Folglich sind die Partikel ohne Leistungsverlust bei Raumtemperatur trockenbar.

Beispiel 10:

Die im Beispiel 1 hergestellten Mikropartikel wurden entsprechend Beispiel 2 mit einer 4-%igen wässrigen Diethylentriamin (DETA)-Lösung bei 90 °C 30 min nachbehandelt, abgekühlt und mit destilliertem Wasser bis zur Neutralität des Waschwassers gespült. Anschließend erfolgte unter den gleichen Bedingungen eine zweite Nachbehandlung mit den Unterschieden, daß eine 4-%ige wässrige Polyethylenimin-Lösung ($M_n$ = 600 D; $M_w$ = 800 D) als Modifikatorlösung verwendet und die Nachbehandlung 30 min durchgeführt wurde. Nach dieser 2. Nachbehandlung wurden die neutral gewaschenen Partikel 30 min bei 121°C in Wasser mit Wasserdampf sterilisiert.

Tabelle 4: Charakteristische Daten der Beispiele 8 und 10:

| Beispiel | Behandlungszeit | Gesamtporösität | Amin-Gehalt |
|---|---|---|---|
| | [min] | [%] | [nmol/mg Partikel $_{trocken}$] |
| 8 | 30 + 30 | 83,3 | 131 |
| 10 | 30 + 30 | 83,1 | 101 |

Durch diese Trocknung verringerte sich die Gesamtporösität nicht. Der Amin-Gehalt verringerte sich offensichtlich als Folge einer Nachreaktion geringfügig. Folglich sind die Partikel ohne Leistungsverlust dampfsterilisierbar.

Beispiel 11:

Die in den Beispielen 1 und 2 hergestellten und charakterisierten Partikel wurden hinsichtlich Kompressionsstabilität beim Durchfluß von einer PEG-Lösung, bestehend aus 0,2907 g PEG MG=2 Mio Dalton und 0,2907 g PEG MG 0 4 Mio Dalton, gelöst in 1 1 Wasser, untersucht. Diese Lösung wies näherungsweise eine Viskosität auf, die vergleichbar der Viskosität von Humanplasma ist. Der Druckverlust/Druckanstieg in Abhängigkeit von der Fließgeschwindigkeit bezieht sich auf eine Betthöhe von 3 cm. Die Meßanordnung erlaubt Druckdifferenzen von maximal 2 bar sicher zu bestimmen. Zum Vergleich wurde als quellungsporöser Träger Sepharose® Typ CL-4B und als permanent-poröser Träger Eupergit® Typ C 250L (aminiert) in die Untersuchungen einbezogen.

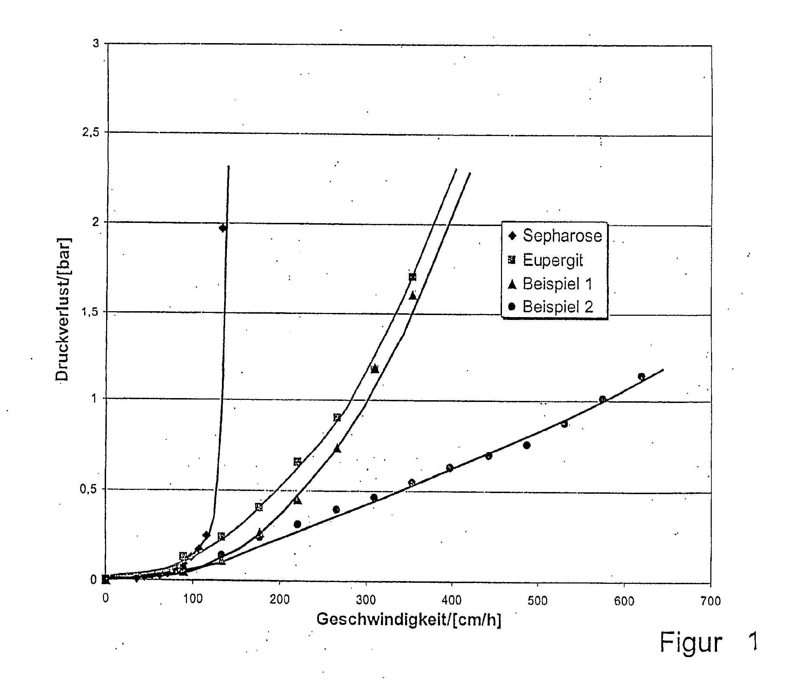

Die Daten der Messungen sind in Fig. 1 dargestellt.

Die Ergebnisse zeigen, daß permanent-poröse Trägermatrizes eine signifikant verbesserte Kompressionsstabilität aufwiesen. Während Sepharose bereits bei einer Fließgeschwindigkeit von 120 cm/h so kompaktierte, daß eine weitere Durchströmung praktisch verhindert wird, erwiesen sich die Partikel des Beispieles 1 und insbesondere des Beispieles 2 als signifikant kompressionsstabiler als Sepharose und moderat kompressionstabiler gegenüber Eupergit.

## Patentansprüche

1. Verfahren zur Herstellung von porösen Polyimid-Mikropartikeln mit den folgenden Verfahrensstufen :

   a) es wird eine Polymerlösung aus einem Polyimid-Polymer oder mehreren Polyimid-Polymeren und einem Lösemittel oder einem Lösemittelgemisch hergestellt,
   b) die Polymerlösung wird durch Versprühen oder durch thermische Phaseninversion zu Mikropartikeln verformt,
   c) die in Stufe b) erhaltenen Mikropartikel werden mit einer wässrigen, einen amin-haltigen Modifikator enthaltenden Funktionalisierungslösung bei erhöhter Temperatur mit oder ohne Rühren behandelt und
   d) die erhaltenen modifizierten Mikropartikel werden gewaschen und gegebenenfalls getrocknet,

   **dadurch gekennzeichnet, dass** als amin-haltiger Modifikator in der Stufe c) ein aliphatisches Diamin oder ein aliphatisches Triamin oder eine Mischung aus einem oder mehreren Diamin(en) und/oder einem oder mehreren Triamin(en) eingesetzt werden, wobei als Diamin oder Triamin Diamine oder Triamine mit primären und/oder sekundären und/oder tertiären Amin-Gruppen, insbesondere Diethylentriamin, eingesetzt werden, wobei die die Amingruppen verbindenden Gruppen Alkylengruppen mit 2, 3, 4 oder 5 C-Atomen darstellen.

2. Verfahren nach Anspruch 1, **dadurch gekennzeichnet, dass** nach der Verfahrensstufe c) folgende zusätzliche Verfahrensstufe durchgeführt wird :

   c2) die nach der Stufe b) erhaltenen Mikropartikel werden nach Entfernen des amin-haltigen Modifikators der Verfahrensstufe c) mit einer wässrigen, mindestens einen weiteren Modifikator enthaltenden Funktionalisierungslösung bei erhöhter Temperatur mit oder ohne Rühren behandelt, wobei der weitere Modifikator aus einer Verbindung mit mindestens zwei funktionellen Gruppen, von denen eine eine Amingruppe ist, pro Molekül oder aus einem Gemisch aus zwei oder mehreren derartigen Verbindungen besteht.

3. Verfahren nach Anspruch 1 oder 2, **dadurch gekennzeichnet, dass** eine oder mehrere der folgenden Verfahrensmaßnahmen ergriffen werden :

   i) in Stufe a) wird eine Polymerlösung mit einem Polymergehalt von 1 bis 20 Gew.-% und insbesondere von 5 bis 15 Gew.-% hergestellt,
   ii) in der Stufe c) wird eine Funktionalisierungslösung mit einem Modifikatorgehalt von 1 bis 10 Gew.-% eingesetzt,
   iii) die Behandlung mit der Funktionalisierungslösung in der Stufe c) wird während eines Zeitraumes von 5 min bis zu 4 Stunden durchgeführt und
   iv) die Behandlung mit der Funktionalisierungslösung in der Stufe c) wird bei einer Temperatur von 50 bis 100 °C durchgeführt.

4. Verfahren nach Anspruch 1 bis 3, **dadurch gekennzeichnet, dass** als Polyimid-Polymer für die Herstellung der Polymerlösung in der Stufe a) reine Polyimide, Poly(amid-imide), Poly(ester-amide) und Poly(ether-imide) eingesetzt werden.

**5.** Verfahren nach Anspruch 4, **dadurch gekennzeichnet, dass** das eingesetzte Polyimid-Polymer mindestens eine Imidgruppe pro Grundeinheit bei einer Molmasse von kleiner/gleich 1000 g/Mol aufweist.

**6.** Verfahren nach einem der Ansprüche 2 bis 5, **dadurch gekennzeichnet, dass** als weiterer Modifikator in der Stufe c2) eine Verbindung, die mindestens eine Hydroxyl-, und/oder CarboxylGruppe zusätzlich zu einer Amingruppe aufweist, und ein Diamin aromatischer Natur, insbesondere Alkoholamine, Aminosäuren, Iminodiessigsäure, Phenylendiamin und Polyamine vom Typ des Ethylenimins, oder eine Mischung davon Anwendung finden.

**Claims**

**1.** A method of producing porous polyimide microparticles with the following method steps:

a) a polymer solution is produced from a polyimide polymer or a plurality of polyimide polymers and a solvent or a solvent mixture,
b) the polymer solution is formed into microparticles by spraying or by thermal phase inversion,
c) the microparticles produced in step b) is treated with an aqueous funtionalisation solution including an amine-containing modifier at increased temperature with or without stirring and
d) the modified microparticles produced are washed and optionally dried,

**characterised in that** an aliphatic diamine or an aliphatic triamine or a mixture of one or more diamine(s) and/or one or more triamine(s) are used in step c) as the amine-containing modifier, wherein diamines or triamines with primary and/or secondary and/or tertiary amine groups, particularly diethylenetriamine, is used as the diamine or triamine, wherein the groups bonding the amine groups constitute alkylene groups with 2, 3, 4 or 5 C atoms.

**2.** A method as claimed in claim 1, **characterised in that** after method step c) the following additional method step is performed:

c2) after removal of the amine-containing modifier of method step c), the microparticles produced after step b) are treated with an aqueous functionalisation solution containing at least one further modifier at increased temperature with or without stirring, wherein the further modifier consists of a compound with at least two functional groups, of which one is an amine group, per molecule or of a mixture of two or more such compounds.

**3.** A method as claimed in claim 1 or 2, **characterised in that** one or more of the following method features is implemented:

i) a polymer solution with a polymer content of 1 to 20 wt.% and particularly of 5 to 15 wt.% is produced in step a),
ii) a functionalisation solution with a modifier content of 1 to 10 wt.% is used in step c),
iii) the treatment with the functionalisation solution in step c) is performed for a period of time of 5 min to 4 hours and
iv) the treatment with the functionalisation solution in step c) is performed at a temperature of 50 to 100°C.

**4.** A method as claimed in claim 1 to 3, **characterised in that** pure polyimides, poly(amide-imide)s, poly(ester-imide)s and poly(ether-imide)s are used as the polyimide polymer for the production of the polymer solution in step a).

**5.** A method as claimed in claim 4, **characterised in that** the polyimide polymer which is used has at least one imide group per basic unit with a molar mass of smaller than/equal to 1000g/Mol.

**6.** A method as claimed in one of claims 2 to 5, **characterised in that** a compound, which includes at least one hydroxyl and/or carboxyl group in addition to an amine group, and a diamine of aromatic type, particularly alcoholamins, amino acids, iminodiacetic acids, phenylenediamine and polyamines of ethyleneimene type or a mixture thereof is used as the further modifier in step c2).

**Revendications**

**1.** Procédé de fabrication de microparticules poreuses de polyimide, comportant les étapes de procédé suivantes :

a) on prépare une solution polymère composée d'un polymère de polyimide ou de plusieurs polymères de polyimide et d'un solvant ou d'un mélange de solvants,
b) la solution polymère est transformée en microparticules par pulvérisation ou par inversion thermique de phase,
c) les microparticules obtenues à l'étape b) sont traitées avec une solution de fonctionnalisation aqueuse contenant un modificateur à base d'amine à une température élevée, avec ou sans agitation, et
d) les microparticules modifiées obtenues sont lavées et éventuellement séchées,

**caractérisé en ce que** l'on utilise en tant que modificateur à base d'amine dans l'étape c) une diamine aliphatique ou une triamine aliphatique ou un mélange composé d'une ou de plusieurs diamines et/ou d'une ou de plusieurs triamines, où on utilise en tant que diamine ou en tant que triamine des diamines ou des triamines comportant des groupes amine primaire et/ou secondaire et/ou tertiaire, en particulier de la diéthylènetriamine, où les groupes reliant les groupes amine sont des groupes alkylène comportant 2, 3, 4 ou 5 atomes de C.

2. Procédé selon la revendication 1, **caractérisé en ce qu'**après l'étape de procédé c), on réalise les étapes de procédé supplémentaires suivantes :

    c2) les microparticules obtenues après l'étape b) sont traitées, après élimination du modificateur à base d'amine de l'étape de procédé c), avec une solution de fonctionnalisation aqueuse contenant au moins un autre modificateur, à une température élevée et avec ou sans agitation, où l'autre modificateur se compose d'un composé comportant au moins deux groupes fonctionnels, dont l'un est un groupe amine, par molécule, ou d'un mélange de deux composés de ce type ou plus.

3. Procédé selon la revendication 1 ou 2, **caractérisé en ce que** l'on prend une ou plusieurs des mesures de procédé suivantes :

    i) dans l'étape a), on prépare une solution polymère présentant une teneur en polymère comprise entre 1 et 20 % en poids, et en particulier entre 5 et 15 % en poids,
    ii) dans l'étape c), on utilise une solution de fonctionnalisation présentant une teneur en modificateur comprise entre 1 et 10 % en poids,
    iii) le traitement avec la solution de fonctionnalisation dans l'étape c) est réalisé pendant une durée comprise entre 5 minutes et 4 heures incluses, et
    iv) le traitement avec la solution de fonctionnalisation dans l'étape c) est réalisé à une température comprise entre 50 et 100 °C.

4. Procédé selon la revendication 1 à 3, **caractérisé en ce que** l'on utilise en tant que polymère de polyimide pour la préparation de la solution polymère dans l'étape a) des polyimides purs, des poly(amide-imides), des poly(ester-amides) et des poly(éther-imides).

5. Procédé selon la revendication 4, **caractérisé en ce que** le polymère de polyimide utilisé présente au moins un groupe imide par motif structural pour une masse molaire inférieure ou égale à 1 000 g/mol.

6. Procédé selon l'une des revendications 2 à 5, **caractérisé en ce que** l'on utilise comme autre modificateur dans l'étape c2) un composé qui présente au moins un groupe hydroxyle et/ou carboxyle en plus d'un groupe amine, et une diamine de nature aromatique, en particulier des alcool-amines, des acides aminés, de l'acide iminodiacétique, de la phénylènediamine et des polyamines du type de l'éthylèneimine, ou un mélange de ceux-ci.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0401005 A
- DE 4117501 A
- GB 2198739 A

- DE 10111663 A
- DE 10111665 A

**In der Beschreibung aufgeführte Nicht-Patentliteratur**

- Present status of apheresis technologies. *Adsorbents, Therapeutic Apheresis,* 1997, vol. 1, 271-283
- **Hermanson et al.** Immobilized Affinity Ligand Techniques. Academic Press Inc, 1992, 1-50

- **Leonard.** New packing materials for protein chromatography. *J. Chromatog. B,* 1997, vol. 699, 3-27